# EUROPÄISCHE PATENTSCHRIFT

(11) **EP 1 955 057 B1**
(45) Veröffentlichungstag und Bekanntmachung des Hinweises auf die Patenterteilung: **12.10.2011**
(21) Anmeldenummer: 06829936.1
(22) Anmeldetag: 06.11.2006
(51) Int. Cl.: G01N 27/416

(54) **VORRICHTUNG UND VERFAHREN ZUM WARTEN EINER MESSEINRICHTUNG IN EINEM STRÖMUNGSKANAL**
DEVICE AND METHOD FOR PERFORMING MAINTENANCE ON A MEASURING APPARATUS IN A FLOW DUCT
DISPOSITIF ET PROCÉDÉ D'ENTRETIEN D'UN DISPOSITIF DE MESURE PLACÉ DANS UN CANAL D'ÉCOULEMENT

(30) Priorität: 28.11.2005 EP 05025907
(43) Veröffentlichungstag der Anmeldung: 13.08.2008
(73) Patentinhaber: SIEMENS AKTIENGESELLSCHAFT, 80333 München (DE)
(72) Erfinder: BRÜCKNER, Uwe, 90518 Altdorf (DE); RIESEN, Ingo, 91207 Lauf (DE)
(86) Internationale Anmeldenummer: PCT/EP2006/068111
(87) Internationale Veröffentlichungsnummer: WO 2007/060087

(56) Entgegenhaltungen:
- EP-A- 0 223 948
- EP-A- 0 281 194
- EP-A- 0 372 121
- DE-A1- 1 802 030
- DE-A1- 3 315 509

## Beschreibung

Die Messung eines Wertes in einer Suspension mittels einer Messeinrichtung führt durch Festsetzen des Feststoffes an der Messvorrichtung zu deren Verschmutzung. Beispielsweise ist die Messung eines pH-Wertes einer Kalkmilchsuspension einer Rauchgasreinigung durch den hohen Feststoffgehalt ganz besonders der Verschmutzung ausgesetzt. Um zu spülen und zu kalibrieren, ist die pH-Elektrode vom Prozessmedium zu trennen.

Herkömmliche Systeme arbeiten extern im Bypass, was aufwendig und teuer ist, oder eingebaut im Prozess, wobei die Elektrode mechanisch aus dem Prozess zurückgezogen wird, um sie zu spülen und zu kalibrieren. Aufgrund der Feststoffbestandteile wie z. B. Sand, die in der Kalkmilch immer enthalten sind, werden die metallischen Flächen der Armatur stark beansprucht und blockieren oft. Eine automatische Wartung durch Reinigung/Kalibrierung ist dann nicht mehr möglich.

Aus der Offenlegungsschrift DE 3315509 A1 ist beispielsweise ein Elektrodeneichgerät und entsprechendes Verfahren zum Eichen einer Elektrode bekannt. Hierin ist eine Fühlelektrode fest eingebaut und ragt in einen Strömungskanal hinein. Die Fühlelektrode wird dadurch geeicht, dass ein strömungsempfindliches Ventilelement vorgesehen wird, welches eine Strömung der Eichlösung zur Elektrode hin während der Strömung einer Testlösung an der Elektrode vorbei abdichtet, jedoch der Eichlösung den Kontakt mit der Elektrode ermöglicht, wenn die Strömung der Testlösung unterbrochen wird. Das Ventilelement ist somit von einer geöffneten in eine geschlossene Stellung und umgekehrt bewegbar. Die in einem Behälter vorgehaltene Eichflüssigkeit kann so bedarfsweise über das Ventilelement in den Strömungsraum eingebracht werden, damit ein Kontakt mit der Fühlelektrode hergestellt wird.

Aus der europäischen Patentanmeldung EP 0223948 A2 ist ein weiteres Elektrodenmeßsystem bekannt mit einer Messelektrode und einem Sitz, welcher mit der Messelektrode während der Messung zusammenwirkt. Die Messelektrode weist eine oder mehrere Elektrodenoberflächen auf während die Halterung einen Einlass und einen Auslass für ein Fluid aufweist, von welchem eine physikalische Eigenschaft gemessen werden soll. Ferner ist eine Membran zwischen den gegeneinander abdichtenden Oberflächen der Elektrode und des Sitzes vorgesehen. Zur Durchführung einer Messung wird die Messelektrode zu dem Sitz geführt.

In der europäischen Patentanmeldung EP 0372121A1 ist eine Vorrichtung zum Festhalten eines Elektrodenhalters, der innerhalb einer Bohrung verschiebbar ist, beschrieben. Der Elektrodenhalter weist ein hinteres, mittleres und vorderes Abdichtteil auf. In einer Zwischenposition wird eine geschlossene Kammer zwischen dem vorderen und mittleren Abdichtteil gebildet, wobei diese Kammer dann den Messteil der Elektrode enthält. In einer zurückgezogenen Position des Elektrodenhalters ist keine Abdichtung realisiert, wobei jedoch die mittlere und die vordere Abdichtung in abdichtender Beziehung zu der Bohrung verbleibt. Je nach Position des Elektrodenhalters entsteht somit ein Behälter zur Durchführung der Messung.

Aufgabe der vorliegenden Erfindung ist es daher, eine Vorrichtung anzugeben, die eine automatische Wartung einer Messeinrichtung ermöglicht.

Diese Aufgabe wird durch die Vorrichtung nach Anspruch 1 gelöst.

Eine weitere Aufgabe der Erfindung ist es, ein Verfahren anzugeben, das eine automatische Wartung einer Messeinrichtung ermöglicht.

Diese Aufgabe wird durch das Verfahren nach Anspruch 11 gelöst.

Die erfindungsgemäße Vorrichtung weist einen Strömungskanal mit einem Wandabschnitt und einen relativ zu dem Wandabschnitt beweglichen Behälter auf, der zum Wandabschnitt hin offen ist. Mindestens eine Messeinrichtung ist im Wandabschnitt in fester Weise angebracht. Der Behälter ist derart beweglich angeordnet, dass er in einer ersten Position mit dem Wandabschnitt ein abgeschlossenes Volumen bildet, während er in einer zweiten Position von dem Wandabschnitt derart beabstandet angeordnet ist, dass er mit dem Wandabschnitt kein abgeschlossenes Volumen bildet. Durch die erfindungsgemäße Vorrichtung kann der Wandabschnitt sowie an ihm angeordnete Einrichtungen gegen seine Umgebung abgedichtet werden.

In einer bevorzugten Ausführungsform ist die mindestens eine Messeinrichtung eine Elektrode, besonders bevorzugt eine pH-Elektrode.

In einer weiteren Ausgestaltung der Erfindung kann mindestens eine Einrichtung weiterhin mindestens ein Anschluss für ein Spül- und/oder Kalibriermediumeintritt und -austritt sein.

Vorzugsweise ist mindestes ein Absaugventil in dem Wandabschnitt angeordnet. Durch das Absaugventil können in dem von dem Behälter und dem Wandabschnitt gebildeten Volumen enthaltene Gase, Flüssigkeiten und Feststoffe abgesaugt werden, sodass eine an dem Wandabschnitt angeordnete Einrichtung vorgereinigt werden kann.

In einer weiteren bevorzugten Ausführungsform der Erfindung kann mindestens ein Anschluss für ein Spül- und/oder Kalibriermediumeintritt und -austritt in dem Behälter angeordnet sein. Dadurch wird eine Spülung und gegebenenfalls eine Kalibrierung der Einrichtung ermöglicht.

Vorteilhaft ist mindestes ein Absaugventil in dem Behälter angeordnet. Dadurch können beispielsweise während der Wartung der Einrichtung nach ihrer Spülung und vor ihrer Rückführung in den Prozess an der Einrichtung haftende Spülmittelrückstände entfernt werden.

Bevorzugt umfasst der mindestens eine Anschluss mindestens einen Anschluss zur Drainage, zum Spülen und/oder zum Puffern.

In einer bevorzugten Ausführungsform ist der Behälter mit einem Antrieb verbunden, der den Behälter bewegt. Der Antrieb umfasst bevorzugt einen Motor. Der Antrieb kann ein E-Motor oder ein pneumatischer Antrieb mit Druckluft oder manuell sein.

Bevorzugt ist die mindestens eine Messeinrichtung eine pH-Elektrode, die mit einem pH-Messgerät/Controller verbunden ist.

In einer bevorzugten Ausführungsform der Erfindung weist der Wandabschnitt eine Dichtung auf, die an den Umfang des offenen Endes des Behälters angepasst ist. Dadurch kann eine sichere Abdichtung des durch den Behälter und den Wandabschnitt gebildeten, abgeschlossenen Volumens gegenüber dem Strömungskanal und dessen Prozessmedium sichergestellt werden.

In einer weiteren Ausgestaltung der Erfindung weist der Behälter an seinem offenen Ende eine Dichtung auf.

Bei dem erfindungsgemäßen Verfahren zum Warten mindestens einer an einem Wandabschnitt des Strömungskanals angeordneten Messeinrichtung wird dem Wandabschnitt mit der zu wartenden Messeinrichtung ein im Inneren des Strömungskanal beweglich angeordneter Behälter übergestülpt, sodass der Behälter zusammen mit dem Wandabschnitt ein abgeschlossenes Volumen bildet, und die Wartung in dem abgeschlossenen Volumen erfolgt.

In einer bevorzugten Ausführungsform umfasst das erfindungsgemäße Verfahren weiterhin ein Spülen der mindestens einen Messeinrichtung . Dadurch können fest anhaftende, die Funktion der Messelektrode störende Partikel entfernt werden.

Bevorzugt weist das erfindungsgemäße Verfahren weiterhin ein Kalibrieren der Messeinrichtung auf. Beispielsweise kann eine pH-Elektrode vor ihrem weiteren Einsatz kalibriert werden.

Weiterhin kann das Verfahren gemäß der Erfindung ein Evakuieren des sich durch die Anordnung des Behälters auf dem Wandabschnitt gebildeten, abgeschlossenen Volumens umfassen. Durch diesen Schritt kann ein Prozess-, Spül- und/oder Kalibriermedium von dem Wandabschnitt sowie der mindestens einen Einrichtung entfernt werden. Vor der Rückführung der Einrichtung in den Prozess kann somit an dem Wandabschnitt und einer Einrichtung anhaftendes Spül- und/oder Kalibriermedium und dergleichen entfernt werden, sodass in den Prozess keine Verunreinigungen eingebracht werden. Andererseits kann durch Evakuierung des sich durch die Anordnung des Behälters auf dem Wandabschnitt gebildeten, abgeschlossenen Volumens auch Prozessmedium vor den Schritten Spülen und/oder Kalibrieren der Einrichtung entfernt werden. D.h., durch die Evakuierung des aus dem Behälter und dem Wandabschnitt gebildeten Volumens kann eine Vorreinigung der Einrichtung durchgeführt werden.

In einer weiteren Ausgestaltung weist das Verfahren ein Ausbauen der mindestens einen Einrichtung und/oder Einbauen mindestens einer Einrichtung auf. Durch die Anordnung des Behälters auf dem Wandabschnitt des Strömungskanals, an dem die Einrichtung derart angeordnet ist, dass sie von dem Behälter und dem Wandabschnitt eingeschlossen ist, wird beispielsweise ein Austausch einer defekten Einrichtung während eines laufenden Prozesses ermöglicht. Weiterhin wird durch die Bildung des abgeschlossenen Volumens der Einbau weiterer Messeinrichtungen in den Wandabschnitt des Strömungskanals ermöglicht.

Weitere mögliche Verfahren sind pH-Bestimmung in Farbstoffsynthesen, pH-Bestimmung in der Carbonatation (Zuckerverarbeitung), pH-Bestimmung in industriellen und kommunalen Abwasseranlagen.

Bevorzugt wird das Verfahren zum Warten einer Elektrode durchgeführt. Insbesondere eignet sich das erfindungsgemäße Verfahren zum Warten einer pH-Elektrode, die zum Messen des pH-Wertes einer Kalkmilchsuspension einer Rauchgasreinigung eingesetzt wird.

Weitere Merkmale, Eigenschaften und Vorteile der vorliegenden Erfindung werden nachfolgend unter Bezugnahme auf die beiliegenden Zeichnungen anhand von Ausführungsbeispielen beschrieben.
- FIG 1: zeigt eine Ausführungsform der erfindungsgemäßen Vorrichtung, bei der eine Einrichtung in Betriebsstellung ist.
- FIG 2: zeigt eine Ausführungsform der erfindungsgemäßen Vorrichtung, bei der eine Einrichtung in Wartungsstellung ist.

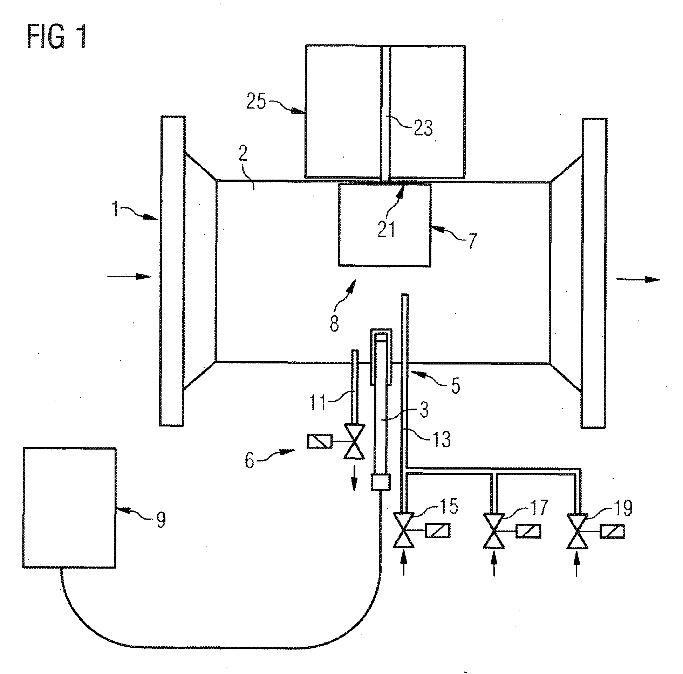

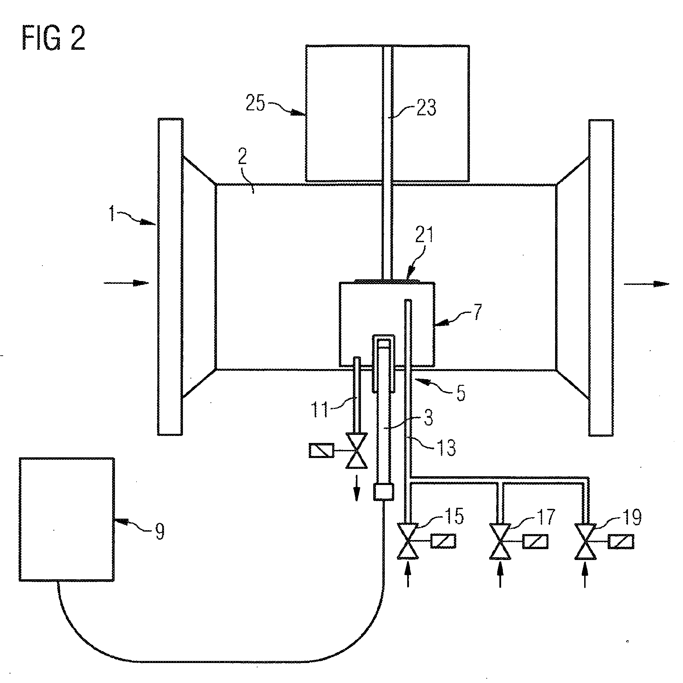

FIG 1 bzw. 2 zeigt als eine Ausführungsform der erfindungsgemäßen Vorrichtung einen Abschnitt einer Rauchgasreinigungsanlage. Diese umfasst einen Strömungskanal 1, welcher von einem Rohrabschnitt 2 der Rauchgasreinigungsanlage gebildet ist und in dem eine bewegliche Hülse 7 angeordnet ist. Diese besteht aus einem Rohr, welches ein offenes Ende 8 und ein mit einer Platte 21 verschlossenes Ende aufweist.

Die Hülse 7 ist im Inneren des Rohrabschnittes in einer Richtung senkrecht zur Axialrichtung des Rohrabschnittes 2 beweglich angeordnet und kann von einer Betriebsstellung (Fig. 1) in eine Wartestellung (Fig. 2) versetzt werden. In der Wartestellung liegt das offene Ende 8 der Hülse 7 an einem Wandabschnitt 5 des Rohrabschnittes 2 an, wobei der Wandabschnitt 5 und die Hülse 7 ein abgeschlossenes Volumen bilden. Das abgeschlossene Volumen ist dabei mittels einer zwischen dem Wandabschnitt 5 und der Hülse 7 angeordneten Dichtung gegen das im Rohrabschnitt 2 strömende Medium abgedichtet.

Am Wandabschnitt 5 ist eine Einrichtung 6 angeordnet, welche im vorliegenden Ausführungsbeispiel eine pH-Messelektrode 3, einen Drainageanschluss 11 sowie einen Zuführungsanschluss 13 mit einer Anzahl von Ventilen 15, 17, 19 umfasst. Wenn sich die Hülse 7 in der in FIG 2 gezeigten Endstellung befindet, befinde sich die Messelektrode 3, der Drainageanschluss 11 und der Zuführanschluss 13 innerhalb des abgeschlossenen und abgedichteten Volumens.

Die pH-Elektrode 3 ist mit einem pH-Messgerät/Controller 9 verbunden und dient zum Messen des pH-Wertes des Mediums im Rohrabschnitt 2. Durch den Anschluss 13 mit den Ventilen 15, 17 und 19 können ein Spülmedium sowie zwei verschiedene Pufferlösungen zum Spülen und Kalibrieren der Elektrode zugeführt werden.

Die Hülse 7 ist mittels der Platte 21 mit einer Stange 23 verbunden. Diese Anordnung ist Teil eines Antriebs 25, der einen Motor (nicht gezeigt) zum Bewegen der Stange 23 und dadurch der Hülse 7 von einer Endstellung in die andere Endstellung umfasst. Der Antrieb 25 kann ein E-Motor oder ein pneumatischer Antrieb mit Druckluft oder manuell sein.

In der in FIG 1 gezeigten Ausführungsform befindet sich die Elektrode 3 in Betriebsstellung, d.h., die Elektrode 3 misst den pH-Wert des Mediums, das durch den Strömungskanal 1 strömt.

In FIG 2 ist die gleiche Ausführungsform der erfindungsgemä-βen Vorrichtung wie FIG 1 mit der Elektrode 3 in Wartungsstellung gezeigt, d.h., die bewegliche Hülse 7 ist auf dem Wandabschnitt 5, an dem die Elektrode 3 und die Anschlüsse 11 und 13 angeordnet sind, derart angeordnet, dass sie mit dem Wandabschnitt 5 ein abgeschlossenen Volumen bildet.

Durch Öffnen des Ventils 15 wird über den Anschluss 13 die Elektrode 3 gespült und von Verschmutzungen befreit. Das Spülmedium wird durch Öffnen des Anschlusses 11 aus dem von Hülse 7 und Wandabschnitt 5 gebildeten Volumen entfernt. Wenn die Spülung der Elektrode 3 abgeschlossen ist, wird sichergestellt, dass Anschluss 11 und Ventil 15 geschlossen sind. Anschließend wird die Elektrode 3 durch Öffnen des Ventils 17 einer Pufferlösung ausgesetzt, die durch Öffnen des Anschlusses 11 aus dem aus Hülse 7 und Wandabschnitt 5 gebildeten Volumen entfernt werden kann. Die Elektrode 3 wird durch Öffnen des Ventils 19 einer zweiten Pufferlösung ausgesetzt, die wiederum durch Öffnen des Anschlusses 11 aus dem Volumen entfernt werden kann. Nach Entfernung der zweiten Pufferlösung ist die Kalibrierung der Elektrode 3 abgeschlossen.

Die Hülse 7 wird durch Betätigen des Antriebs 25 bewegt und von dem Wandabschnitt 5 beabstandet angeordnet, sodass die Hülse 7 mit dem Wandabschnitt 5 kein abgeschlossenes Volumen bildet. Die Elektrode 3 befindet sich dann wieder in Betriebsstellung.

Im beschriebenen Ausführungsbeispiel ist ein Drainageanschluss 11 im Wandabschnitt 5 des Rohrabschnittes 2 angeordnet. Alternativ kann auch wenigstens eine Absaugöffnung in der Hülse 7 angeordnet sein. Die Abfuhr des abgesaugten Mediums kann dabei bspw. durch die Stange 23 erfolgen, wenn man diese hohl ausgestaltet, sodass diese ein Rohr bildet. Schließlich ist es auch möglich, dass ein Absaugen sowohl über den Drainageanschluss als auch über die Absaugöffnung erfolgt.

## Patentansprüche

1. Vorrichtung mit einem Strömungskanal (1), welcher einen Wandabschnitt (5) aufweist, in dem mindestens eine nach einer bestimmten Betriebsdauer zu überarbeitende in den Strömungskanal hineinragende Einrichtung (3, 11, 13) angeordnet ist, wovon mindestens eine Einrichtung (3) eine Messeinrichtung ist, und in welchem ein zu dem Wandabschnitt (5) hin offener Behälter (7) derart relativ zum Wandabschnitt (5) beweglich angeordnet ist, dass er in einer ersten Stellung von der mindestens einen Einrichtung (3, 11, 13) entfernt angeordnet ist und in einer zweiten Stellung zusammen mit dem Wandabschnitt (5) ein abgeschlossenes, von dem übrigen Strömungskanal (1) abgetrenntes Volumen bildet.

2. Vorrichtung nach Anspruch 1, Messeinrichtung
**dadurch gekennzeichnet, dass** die mindestens eine Messeinrichtung eine Elektrode (3), bevorzugt eine pH-Elekrode, ist.

3. Vorrichtung nach Anspruch 1 oder 2,
**dadurch gekennzeichnet, dass** mindestens eine Einrichtung (11, 13) weiterhin mindestens ein Anschluss (11, 13) für ein Spül- und/oder Kalibriermediumeintritt und -austritt ist.

4. Vorrichtung nach einem der Ansprüche 1 bis 3,
**dadurch gekennzeichnet, dass** mindestes ein Absaugventil in dem Wandabschnitt (5) angeordnet ist.

5. Vorrichtung nach einem der Ansprüche 1 bis 4,
**dadurch gekennzeichnet, dass** mindestens ein Anschluss für ein Spül- und/oder Kalibriermediumeintritt und -austritt und/oder mindestens ein Absaugventil in dem Behälter (7) angeordnet ist.

6. Vorrichtung nach Anspruch 3 oder 5,
**dadurch gekennzeichnet, dass** der mindestens eine Anschluss (11, 13) mindestens einen Anschluss (11, 13) zur Drainage, zum Spülen und/oder zum Puffern umfasst.

7. Vorrichtung nach einem der Ansprüche 1 bis 6,
**dadurch gekennzeichnet, dass** der Behälter (7) mit einem Antrieb (25) verbunden ist.

8. Vorrichtung nach einem der Ansprüche 2 bis 7,
**dadurch gekennzeichnet, dass** die pH-Elektrode (3) mit einem pH-Messgerät/Controller (9) verbunden ist.

9. Vorrichtung nach einem der Ansprüche 1 bis 8,
**dadurch gekennzeichnet, dass** der Wandabschnitt (5) eine Dichtung aufweist, die an den Umfang des offenen Ende des Behälters (7) angepasst ist.

10. Vorrichtung nach einem der Ansprüche 1 bis 9,
**dadurch gekennzeichnet, dass** der Behälter (7) an seinem offenen Ende eine Dichtung aufweist.

11. Verfahren zum Warten einer an dem Wandabschnitt (5) eines Strömungskanals (1) angeordneten mindestens einen Einrichtung (3, 11, 13), wovon mindestens eine Einrichtung (3) eine Messeinrichtung ist, in welchem der Wandabschnitt (5) mit der zu wartenden mindestens einen Einrichtung (3, 11, 13) ein im Inneren des Strömungskanals (1) beweglich angeordneter Behälter (7) übergestülpt wird, sodass der Behälter (7) zusammen mit dem Wandabschnitt (5) ein abgeschlossenes Volumen bildet, und die Wartung im abgeschlossenen Volumen erfolgt.

12. Verfahren nach Anspruch 11, in dem die Wartung ein Spülen der mindestens einen Einrichtung (3) umfasst.

13. Verfahren nach Anspruch 11 oder 12, in dem die Wartung ein Kalibrieren der mindestens einen Einrichtung (3) umfasst.

14. Verfahren nach einem der Ansprüche 11 bis 13, in dem die Wartung ein Evakuieren des abgeschlossenen Volumens umfasst.

15. Verfahren nach Anspruch 11, in dem die Wartung ein Ausbauen der mindestens einen Einrichtung (3, 11, 13) und/oder ein Einbauen mindestens einer Einrichtung (3, 11, 13) umfasst.

16. Verfahren nach einem der Ansprüche 11 bis 15, **dadurch gekennzeichnet, dass** die mindestens eine Messeinrichtung (3) eine Elektrode (3), bevorzugt eine pH-Elekrode, ist.

## Claims

1. Device comprising a flow duct (1) having a wall section (5) in which there is disposed at least one apparatus (3, 11, 13) projecting into the flow duct and requiring maintenance after a particular operating time, at least one apparatus (3) being a measuring apparatus, and wherein a container (7) which is open toward the wall section (5) is movably disposed relative to the wall section (5) such that, in a first position, it is disposed at a distance from the at least one apparatus (3, 11, 13) and, in a second position, forms together with the wall section (5) a closed three-dimensional space separate from the rest of the flow duct (1).

2. Device according to claim 1,
**characterised in that** the at least one measuring apparatus is an electrode (3), preferably a pH electrode.

3. Device according to claim 1 or 2,
**characterised in that** at least one apparatus (11, 13) is also at least one port (11, 13) for a rinsing and/or calibration medium inlet and outlet.

4. Device according to one of claims 1 to 3,
**characterised in that** at least one suction valve is disposed in the wall section (5).

5. Device according to one of claims 1 to 4,
**characterised in that** at least one port for a rinsing and/or calibration medium inlet and outlet and/or at least one suction valve is disposed in the container (7).

6. Device according to claim 3 or 5,
**characterised in that** the at least one port (11, 13) comprises at least one port (11, 13) for drainage, for rinsing and/or for buffering.

7. Device according to one of claims 1 to 6,
**characterised in that** the container (7) is connected to a drive (25).

8. Device according to one of claims 2 to 7,
**characterised in that** the pH electrode (3) is connected to a pH measuring instrument/controller (9).

9. Device according to one of claims 1 to 8,
**characterised in that** the wall section (5) has a seal which is matched to the size of the open end of the container (7).

10. Device according to one of claims 1 to 9,
**characterised in that** the container (7) has a seal at its open end.

11. Method for performing maintenance on an at least one apparatus (3, 11, 13) disposed on the wall section (5) of a flow duct (1), at least one apparatus (3) being a measuring apparatus, wherein there is placed on the wall section (5) containing the at least one apparatus (3, 11, 13) requiring maintenance a container (7) movably disposed inside the flow duct (1) so that the container (7) forms together with the wall section (5) a closed three-dimensional space, and maintenance is performed in said closed three-dimensional space.

12. Method according to claim 11,
wherein maintenance comprises rinsing of the at least one apparatus (3).

13. Method according to claim 11 or 12,
wherein maintenance comprises calibration of the at least one apparatus (3).

14. Method according to one of claims 11 to 13,
wherein maintenance comprises evacuation of the closed three-dimensional space.

15. Method according to claim 11,
wherein maintenance comprises removal of the at least one apparatus (3, 11, 13) and/or installation of at least one apparatus (3, 11, 13).

16. Method according to one of claims 11 to 15,
**characterised in that** the at least one measuring apparatus (3) is an electrode (3), preferably a pH electrode.

## Revendications

1. Dispositif ayant un canal ( 1 ) d'écoulement, qui comporte une partie ( 5 ) de paroi, dans laquelle est disposée au moins un dispositif (3, 11, 13) pénétrant dans le canal d'écoulement et à réviser après une certaine durée de fonctionnement, au moins un dispositif (3) étant un dispositif de mesure, et dans lequel un récipient ( 7 ) ouvert, vers la partie ( 5 ) de paroi, est monté mobile par rapport à la partie ( 5 ) de paroi, de manière à être, dans une première position, éloigné du au moins un dispositif ( 3, 11, 13 ) et à former, dans une deuxième position, ensemble avec la partie ( 5 ) de paroi, un volume fermé séparé du reste du canal ( 1 ) d'écoulement.

2. Dispositif suivant la revendication 1,
**caractérisé en ce que** le au moins un dispositif de mesure est une électrode ( 3 ), de préférence une électrode de pH.

3. Dispositif suivant la revendication 1 ou 2,
**caractérisé en ce qu'**au moins un dispositif ( 11, 13 ) est au moins un raccord ( 11, 13 ) d'entrée et de sortie d'un fluide de lavage et/ou d'étalonnage.

4. Dispositif suivant l'une des revendications 1 à 3,
**caractérisé en ce qu'**au moins une vanne d'aspiration est montée dans la partie ( 5 ) de paroi.

5. Dispositif suivant l'une des revendications 1 à 4,
**caractérisé en ce qu'**au moins un raccord pour une entrée et sortie d'un fluide de lavage et/ou d'étalonnage et/ou au moins une vanne d'aspiration est monté dans le récipient ( 7).

6. Dispositif suivant la revendication 3 ou 5,
caractérisé en que le au moins un raccord ( 11, 13 ) comprend au moins un raccord ( 11, 13 ) de drainage, de lavage et/ou d'accumulation.

7. Dispositif suivant l'une des revendications 1 à 6,
**caractérisé en ce que** le récipient ( 7 ) est relié à un entraînement ( 25 ).

8. Dispositif suivant l'une des revendications 2 à 7,
**caractérisé en ce que** l'électrode ( 3 ) de pH est reliée à un appareil de mesure de pH/dispositif de commande ( 9 ).

9. Dispositif suivant l'une des revendications 1 à 8,
**caractérisé en ce que** la partie ( 5 ) de paroi comporte une garniture d'étanchéité, qui est adaptée au pourtour de l'extrémité ouverte du récipient ( 7 ).

10. dispositif suivant l'une des revendications 1 à 9,
**caractérisé en ce que** le récipient ( 7 ) comporte une garniture d'étanchéité à son extrémité ouverte.

11. procédé d'entretien d'au moins un dispositif ( 3, 11, 13 ) monté sur la partie (5) de paroi d'un canal (1) d'écoulement, au moins un dispositif ( 3 ) étant un dispositif de mesure, dans lequel la partie ( 5 ) de paroi est mise avec le dispositif 3, 11, 13 ) à entretenir sur un récipient ( 3 ) monté mobile à l'intérieur du canal ( 1 ) d'écoulement, de manière à ce que le récipient ( 7 ) forme ensemble avec la partie ( 5 ) de paroi un volume fermé, et l'entretien s'effectue dans le volume fermé.

12. Procédé suivant la revendication 11, dans lequel l'entretien comprend un lavage du au moins un dispositif ( 3 ).

13. Procédé suivant la revendication 11 ou 12, dans lequel l'entretien comprend un étalonnage du au moins un dispositif ( 3 ).

14. Procédé suivant l'une des revendications 11 ou 13, dans lequel l'entretien comprend une mise sous vide du volume fermé.

15. Procédé suivant la revendication 11, dans lequel l'entretien comprend un démontage du au moins un dispositif ( 3, 11, 13 ) et/ou un montage du au moins un dispositif ( 3, 11, 13 ).

16. Procédé suivant l'une des revendications 11 à 15, **caractérisé en ce que** le au moins un dispositif ( 3 ) de mesure est une électrode ( 3 ), de préférence une électrode de pH.
